# EUROPEAN PATENT APPLICATION

(11) **EP 2 667 316 A1**
(43) Date of publication of application: **27.11.2013**
(21) Application number: 12305561.8
(22) Date of filing: 22.05.2012
(51) Int. Cl.: G06F 21/30

(54) **Electronic memory device**

(71) Applicant: Gemalto SA, 92190 Meudon (FR)
(72) Inventor: Grenier, Fabrice, 92190 Meudon (FR)

(57) **Abstract**

The invention relates to an electronic device, comprising:
- a memory (5), to store a password (*Pw*) list,
- a display (7), configured to display alphanumeric data,
- a keypad (9),
- a microcontroller (13) configured to cause the display (7) to display selected passwords (*Pw*) from the memory (5) when selection of a password (*Pw*) to display is made using the keypad (9),

**characterized in that** it further comprises a user equipment interface (11), linked to the microcontroller (13) for updating the password (*Pw*) list stored in the memory (5) with data coming from the user equipment via the interface (11). The invention also relates to the associated method to update the password (*Pw*) list using a user equipment.

## Description

The invention relates to an electronic device of the smartcard type, including in particular payment or security functions.

The number of passwords the average person has to remember is nowadays relatively important. Said passwords comprise for example the PIN (Personal Identification Number) of the credit card, of the mobile phone, security codes for accessing one maybe more e-mail accounts, and other internet profiles (online customer service, social networks etc.).

In order to avoid the risk of forgetting or confusing some of the passwords, the considered user will often write down the passwords, or use a single password for multiple accounts. Such techniques are considered possibly weakening for the security level the passwords are meant to ensure.

In particular, by writing passwords down, a risk emerges that the written passwords be found and read. Using the same password with multiple accounts has the drawback that once the password is discovered, the potential damage is increased since the fraudulent person may access multiple restricted services using the discovered password.

It is usually accepted that the best passwords comprise at least a part of randomly selected elements, as opposed to complete words known from dictionaries, and combine all available extended alphanumeric symbols : letters, numbers and other signs such as the at sign @, the dollar sign $, the ampersand &, etc.

It is known to realize and use user carried electronic memory devices which store and display the stored passwords upon request. In particular, it is known to realize such memory devices in smart card form factor, with implemented display and keypad for entering the codes and request their display.

However, such electronic devices are stripped down to most basic elements to fit in a wallet or pocket, as it is disclosed in EP-A-1 111 556. In particular, the keypads in said devices comprise only a minimal number of keys, in most cases 0 to 9 and selection means (Enter/Exit). These known electronic devices therefore only handle a part of the possibilities for the passwords, thereby decreasing the offered security level. Also, the stripped down keyboard makes the typing more demanding.

In order to overcome at least partially the aforementioned drawbacks, the invention has for object an electronic device, comprising
- a memory, to store a password list,
- a display configured to display alphanumeric data,
- a keypad,
- a microcontroller configured to cause the display to display selected passwords from the memory when selection of a password to display is made using the keypad,
**characterized in that** it further comprises a user equipment interface, linked to the microcontroller for updating the password list stored in the memory.

This electronic device allows using a user equipment as human to machine interface to update the password list, which means that a more ergonomic and complete keyboard can be used.

The electronic device may furthermore feature one or more of the following characteristics, taken separately or in combination.

The keypad is furthermore configured to type in a code, and the access to the password list on the memory is protected by a code to be typed in using the keypad.

It also comprises a PIN chip storing a PIN code for a payment unit, and the code used to protect the password list is the PIN code stored on the PIN chip.

It has a smart card form factor.

It has the form of a USB stick.

The user equipment interface is a smart card connector, a near field communication interface or a RFID communication interface.

The microcontroller is configured to display the password on the display for a limited amount of time, which may be of a few seconds.

It further comprises a random password generation unit, and the microcontroller is further configured to generate random passwords using the random password generation unit, said random password generation unit may be comprised in a one-time-password generation unit.

The invention also relates to the associated method to store passwords on an electronic memory device, comprising :
- a memory, to store a password list,
- a display, configured to display alphanumeric data,
- a keypad,
- a microcontroller configured to cause the display to display selected passwords from the memory when selection of a password to display is made using the keypad, and
- a user equipment interface, linked to the microcontroller for updating the password list stored in the memory with the steps:
   - a user equipment is connected to the user equipment interface,
   - the microcontroller updates the password list on the memory using data from the user equipment.

Said method may further comprise a step in which the microcontroller prompts the user to type in a PIN code, and in which the typed PIN code is used to authenticate the user and proceed to the password list update on the memory and the user equipment may be one of the following :
- a computer,
- a laptop,
- an electronic pad,
- a smartphone.

Other characteristics and advantages will appear at the reading of the following description of the surrounded figures, among which :
- figure 1 is a schematic view of an embodiment of an electronic device according to the invention,
- figure 2 is a schematic illustrating the main steps of a method to access passwords on the electronic device,
- figure 3 is a schematic illustrating the main steps of a method to update a list of passwords on the electronic device.

On all figures, the same references relate to the same elements.

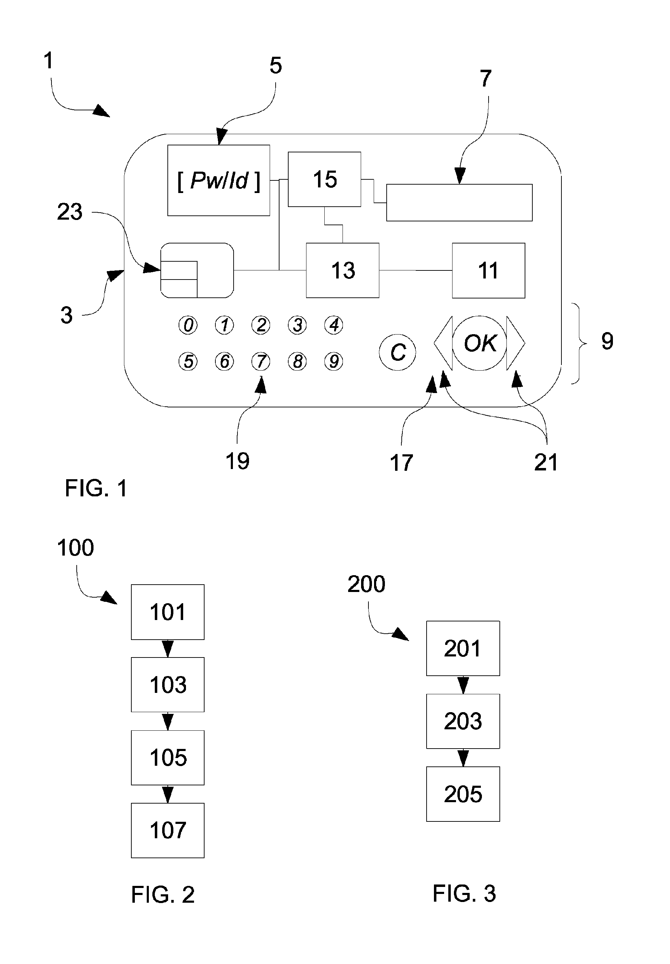

Figure 1 depicts schematically a memory device according to the invention.

The memory device 1 comprises here a body 3, made of laminated plastic embedding the other components. The body 3 features here the smart card form factor (approx. 55mm x 85mm and few millimeters thickness, see ISO 7810), so as to advantageously fit in a wallet, purse or pocket. An alternative embodiment foresees the form analogous to that of a classical USB stick : 4 to 10 centimeters long, 1 to 3 centimeters large, 0.5 to 2 centimeters thick.

The components embedded in the body 3 comprise a memory unit 5, a display 7, a keypad 9, a user equipment interface 11 and a microcontroller 13 and a power source 15.

The memory unit 5 is for example an EEPROM or Flash memory circuit, able to store data in digital form. In particular, the memory is erasable and writable so that the data it stores can be updated. It stores in particular passwords *Pw*, associated to an identification label *Id.* To access a specific password Pw, the user selects the associated identification label *Id*, either by typing it in or by selecting it from a list.

While browsing in a list, the identification label *Id* may serve to sort out the list, for example by arranging the password-identification label couples *Pw*/*Id* by alphabetic order of the identification labels *Id.* In its simplest form, the identification label *Id* is merely a number attributed when making the entry to store a new password Pw.

The display 7 is here a liquid crystal display (LCD), able to display a certain number of alphanumeric characters, six in the present example. In order to keep power consumption and overall volume of the display 7 as low as possible, the display 7 can be a simple indium tin oxyde electrode, low resolution screen, in particular the type having a reduced number of pixels and/or bars to represent the numbers and letters.

The keypad 9 is embedded in the body 3, so that the keys only slightly protrude. In the depicted embodiment, the keypad 9 comprises navigation means 17, and a numeric pad ("numpad") 19. The navigation means 17 comprise two directional arrows (left and right) 21, one selection button *OK* and one cancel button C. The numeric pad 19 comprises keys labeled from 0 to 9, to allow direct typing in of numbers, for example to input a code, possibly associated to a PIN chip 23 integrated in the card.

In addition, the keys may be configured to type in letters, for example by linking multiple pressing of a key in a predetermined amount of time as typing in a different value (see phone keypads for text typing), or by using additional keys, for example one that, when pressed, causes the value of the keys to change from numbers to letters and/or other symbols.

It is possible to use the navigation means 17 to type in the symbols without additional keys (numeric pad 19) by selecting the symbols from a list.

In particular, the typing or the editing in of passwords Pw and identification labels *Id* may be performed using the keypad, for example by selecting an editing option from a menu accessed when the device 1 is started, then selecting the label *Id* of the password-identification label couple *Pw*/*Id* the user wishes to modify, and then modifying said couple *Pw*/*Id.*

The user equipment interface 11 is of the machine to machine type : it is configured to allow connection to a user equipment (not represented), and not to allow direct interaction with a user. This interface 11 can for example comprise a smart card contact pad (see ISO 7816), or USB (Universal Serial Bus) contact pad, or a remote communication transceiver, for example a near field communication or RFID (Radio Frequency IDentification) antenna, or a combination of the latter.

The interface 11 is configured to be connected to a user equipment, such as a computer, a laptop, a smartphone or an electronic pad. In particular, an adapter piece to more standard interfaces, for example from near field communication to USB, may be used to allow connection to a greater number of user equipments.

The user equipment is used as means to enter the passwords Pw in a more comfortable and efficient way than as previously described with the sole integrated keypad 9. To enter passwords Pw, the electronic device 1 is connected to the user equipment using the interface 11, and the user accesses and modifies the content of the memory 5 using the user equipment as human-to-machine interface.

The microcontroller 13 is connected to other elements, and generates instructions for said other elements according to programmed routines, as a function of data typed in on the keypad 9. The microcontroller 13 comprises several functional units, dedicated to one or more particular functions. Such units, as here mentioned, are not physically distinguishable on the microcontroller 13, but integrated in it. The functional units comprise finite sets of instructions, which, when applied, cause the electronic device to react properly to exterior inputs, from the keypad 9 or the interface 11.

The microcontroller 13 comprises in particular a security unit, which blocks the access to the data in the memory unit 5 in case the user fails to authenticate. For example, the security unit may prompt the user to type in a code anytime the electronic device 1 is activated, or anytime the display of a password is required. The expected code may in particular be a PIN code of a PIN chip 23.

The microcontroller 13 may also comprise functional units with other purposes. For example it may comprise a payment unit, to perform payments as a usual credit card, or a random password generation unit, to generate fully random passwords, which is then usable to create a password in the list. Such a random password generation unit may share ressources or be integrated in a one-time-password (OTP) generation unit. In particular, the security unit used to secure the displaying of the passwords *Pw* may at least partially share the securing elements of the payment unit, for example by using the same PIN chip 23 for payment and accessing the password-identification label *Pw*/*Id* list.

Also, a particular embodiment foresees that a certain number of consecutive misses (e.g. three consecutive misses) at entering the code to display a password Pw causes the electronic device 1 to enter a locked status, in which displaying a password is made impossible, until another unit of the electronic device 1 is used. For example, until a cash withdrawal is performed using the payment unit at a registered cash withdrawal machine.

The power source 15 can be either an embedded battery, or a high capacity capacitor, advantageously charged by connecting the electronic device 1 to the user equipment using the interface 11. In addition or as an alternative, a portion of the surface of the electronic device 1 may be covered by photovoltaic cells to generate the required power when exposing said surface to light. The power source 15 is connected to all the elements to provide electric current.

The process 100 to access the memory 5 and display a password stored therein is shown in figure 2, in form of a flowchart.

The first step 101 is the activation of the device, for example by pressing for a given amount of time one of the keys of the keypad 9 (selection button *OK* in particular). This causes in the next step 103 the security unit of the microcontroller 13 to prompt a request to type in the PIN code of the electronic device 1. If the entered PIN code is wrong, the security unit repeats the prompting step 103, and after three unsuccessful trials blocks the access to the memory 5.

If the entered PIN code corresponds to the expected one, the security unit clears the user as legitimate, and authorizes further proceedings. The microcontroller 13 then prompts the user in the following step 105 to enter an identification label Id using the numeric keys 19, or to browse through the identification label *Id* list using the navigation means 17.

Once the user has selected an identification label *Id,* the microcontroller 13 causes the display 7 to display the password Pw corresponding to the selected identification label *Id* in the step afterward 107. The displaying of the password Pw lasts a few seconds, and then the display 7 returns to displaying only the identification label *Id* or shuts completely down. In particular, the security unit will require prompting again a PIN code to access the memory 5 and the thereon stored passwords Pw.

The process 200 to update the content of the memory 5 of the electronic device 1 is shown in figure 3, in form of a flow chart.

The first step 201 is the connection of the electronic device 1 to the user equipment, and possibly starting a program to manage the update on sides of the user equipment. When requesting in the following step 203 the access to the content of the memory 5, the user is prompted to enter the PIN code of the electronic device 1. Once again, if the entered PIN code is wrong, the security unit repeats the prompting step 203, and after three unsuccessful trials blocks the access to the memory 5.

If the user successfully typed in the PIN code, the content of the memory 5 is made readable and editable. In the next step 205, the user consequently updates, modifies, erases or adds entries in the password-identification labels *Pw*/*Id* list contained in the memory 5.

In particular, the editing of the content of the memory 5 can be entirely copied temporarily on some memory of the user equipment, either RAM or ROM. The editing takes place on the memory of the user equipment, and the resulting edited list is then sent to the memory 5 of the user equipment 1, which uses said data to update its content.

In particular, it is possible to keep a copy of the list *Pw*/*Id* on the user equipment. Said copy may be used on one hand as back-up and on the other hand as editing base. After editing the copy, the modified version is submitted via the interface 11, and paste on the memory 5.

However, the mere existence of the copy requires restriction of the access to said copy, for example by typing in an access token (password), or by using the security unit of the electronic device 1, thus requiring connection of said electronic device 1. The copy may in particular be stored on an online server.

In the case of an electronic device comprising a payment unit in the microcontroller 13, to act as a credit card, the server may be run by the bank delivering said credit card, and a copy of the password-identification labels list *Pw*/*Id* may be made accessible from a secured part of the internet site of the bank, for example the one used for online bank account management by the user, and used for editing and updating.

In the case where the electronic device 1 is a credit card, with a payment unit and a PIN chip 23, it is known to cause a canceling of the credit card if it is misused. For example, a credit card 1 for which the PIN code was unsuccessfully entered three consecutive times has its PIN chip obliterated : a power surge erases the stored PIN code and renders the PIN chip 23 unusable. This also works for credit cards reported as stolen, where the next use in an automated teller machine will cause cancellation.

Advantageously, the power surge is also used to erase and render unusable the memory 5, so that a potential credit card thief cannot use the memory 5 to retrieve the thereon contained password-identification labels list *Pw*/*Id* using extensive code-breaking methods. This supposes, of course, that a back-up copy of the list has been made, so that said list is not lost.

The invention allows a user to store his passwords in a convenient and secure fashion. Since most of the components implied are already present on some credit cards or other chip cards, the invention can be implemented for a small price raise in the final product.

## Claims

1. Electronic device, comprising :
- a memory (5), to store a password (*Pw*) list,
- a display (7), configured to display alphanumeric data,
- a keypad (9),
- a microcontroller (13) configured to cause the display (7) to display selected passwords (*Pw*) from the memory (5) when selection of a password (*Pw*) to display is made using the keypad (9),
**characterized in that** it further comprises a user equipment interface (11), linked to the microcontroller (13) for updating the password (*Pw*) list stored in the memory (5).

2. Electronic device according to claim 1, **characterized in that** the keypad is furthermore configured to type in a code, and **in that** the access to the password (*Pw*) list on the memory (5) is protected by a code to be typed in using the keypad (9).

3. Electronic device according to claim 2, **characterized in that** it also comprises a PIN chip (23) storing a PIN code for a payment unit, and **in that** the code used to protect the password (*Pw*) list is the PIN code stored on the PIN chip (23).

4. Electronic device according to claim 1, **characterized in that** it has a smart card form factor.

5. Electronic device according to claim 1, **characterized in that** it has the form of a USB stick.

6. Electronic device according to claim 1, **characterized in that** the user equipment interface (11) is a smart card connector.

7. Electronic device according to claim 1, **characterized in that** the user equipment interface (11) is a near field communication interface.

8. Electronic device according to claim 1, **characterized in that** the user equipment interface (11) is a RFID communication interface.

9. Electronic device according to claim 1, **characterized in that** the microcontroller (13) is configured to display the password on the display for a limited amount of time.

10. Electronic device according to claim 9, **characterized in that** the limited amount of time is of a few seconds.

11. Electronic device according to claim 1, **characterized in that** it further comprises a random password generation unit, and **in that** the microcontroller (13) is further configured to generate random passwords using the random password generation unit.

12. Electronic device according to claim 11, **characterized in** the random password generation unit is comprised in a one-time-password generation unit.

13. Method to store passwords on an electronic memory device, comprising :
- a memory (5), to store a password (*Pw*) list,
- a display (7), configured to display alphanumeric data,
- a keypad (9),
- a microcontroller (13) configured to cause the display (7) to display selected passwords (*Pw*) from the memory (5) when selection of a password (*Pw*) to display is made using the keypad (9), and
- a user equipment interface (11), linked to the microcontroller (13) for updating the password (*Pw*) list stored in the memory (5), **characterized in that** it comprises the steps :
- a user equipment is connected to the user equipment interface (11),
- the microcontroller (13) updates the password (*Pw*) list on the memory (5) using data from the user equipment.

14. Method according to claim 13, **characterized in that** it further comprises a step in which the microcontroller prompts the user to type in a PIN code using the keypad (9), and in which the typed PIN code is used to authenticate the user and proceed to the password (*Pw*) list update on the memory (5).

15. Method according to claim 13, **characterized in that** the user equipment is one of the following :
- a computer,
- a laptop,
- an electronic pad,
- a smartphone.
